# EUROPÄISCHE PATENTSCHRIFT

(11) **EP 4 201 294 B1**
(45) Veröffentlichungstag und Bekanntmachung des Hinweises auf die Patenterteilung: **12.02.2025**
(21) Anmeldenummer: 22213662.4
(22) Anmeldetag: 15.12.2022
(51) Int. Cl.: G06F 3/01, G06F 3/03, A47L 15/00, A47L 15/42, A47L 15/50

(54) **BEDIENVORRICHTUNG UND VERFAHREN ZUM BEDIENEN EINES REINIGUNGSGERÄTS UND REINIGUNGSGERÄT**
OPERATING DEVICE AND METHOD FOR OPERATING A CLEANING DEVICE AND CLEANING DEVICE
DISPOSITIF DE COMMANDE ET PROCÉDÉ DE COMMANDE D'UN APPAREIL DE NETTOYAGE ET APPAREIL DE NETTOYAGE

(30) Priorität: 21.12.2021 BE 202106015
(43) Veröffentlichungstag der Anmeldung: 28.06.2023
(73) Patentinhaber: Miele & Cie. KG, 33332 Gütersloh (DE)
(72) Erfinder: Tiekötter, Stefan, 33699 Bielefeld (DE); Kara, Seyfettin, 32139 Spenge (DE)

(56) Entgegenhaltungen:
- EP-B1- 3 543 390
- DE-A1- 102015 222 580
- US-A1- 2017 205 891
- US-A1- 2021 127 943

## Beschreibung

Der hier vorgestellte Ansatz betrifft eine Bedienvorrichtung und ein Verfahren zum Bedienen eines Reinigungsgeräts und ein Reinigungsgerät.

Die DE 10 2014 011 771 A1 beschreibt eine Bedienvorrichtung für ein elektronisches Haushaltsgerät.

Die EP 3 543 390 B1 offenbart eine Bedienvorrichtung zum Bedienen eines Reinigungsgeräts, welches im Bereich der Anzeigeeinheit eine Kamera aufweist, wobei mit einer Einleseeinheit ein Kamerasignal der Kamera einlesbar ist.

Die DE 10 2015 222 580 A1 offenbart eine Spülmaschine mit einer Bilderkennungseinrichtung zum Detektieren einer Anwesenheit eines Lebewesens in einem bestimmten Bereich vor der Spülmaschine, wodurch eine Benutzergeste im Nahbereich der Spülmaschine erkannt und ein selbsttätiges Öffnen der Tür veranlasst werden kann.

Die US 2017/205891 A1 offenbart ein Gerätesteuerungssystem mit einer Kamera zur Aufnahme von Benutzergesten.

Die US 2021/127943 A1 offenbart eine Geschirrspülmaschine mit einer Innenraumkamera zum Überwachen des Innenraums der Geschirrspülmaschine. Eine Steuereinheit der Geschirrspülmaschine ist dazu eingerichtet, basierend auf Kamerasignalen der Kamera, eine Handbewegung von außen in den Innenraum der Geschirrspülmaschine hinein zu erkennen, und daraufhin zu bestimmen, ob mit der Hand ein Geschirrstück in die Geschirrspülmaschine eingeführt wird. Je nach Art des eingeführten Geschirrstücks kann dann ein entsprechender Hinweis bezüglich einer geeigneten Platzierung des Geschirrstücks in einem Geschirrkorb der Geschirrspülmaschine ausgegeben werden.

Dem hier vorgestellten Ansatz liegt die Aufgabe zugrunde, eine verbesserte Bedienvorrichtung zum Bedienen eines Reinigungsgeräts, ein verbessertes Verfahren zum Bedienen eines Reinigungsgeräts und ein verbessertes Reinigungsgerät zu schaffen.

Erfindungsgemäß wird diese Aufgabe durch eine Bedienvorrichtung zum Bedienen eines Reinigungsgeräts, ferner ein Verfahren zum Bedienen eines Reinigungsgeräts sowie ein Reinigungsgerät mit den Merkmalen bzw. Schritten der Hauptansprüche gelöst. Gegenstand des vorliegenden Ansatzes ist auch ein Computerprogramm. Vorteilhafte Ausgestaltungen und Weiterbildungen des Ansatzes ergeben sich aus den nachfolgenden Unteransprüchen.

Die mit dem hier vorgestellten Ansatz erreichbaren Vorteile bestehen darin, dass eine intuitiv durchführbare Möglichkeit zur Bedienung eines Reinigungsgeräts für einen Nutzer des Reinigungsgeräts geschaffen wird.

Eine Bedienvorrichtung zum Bedienen eines Reinigungsgeräts mit zumindest einer beweglichen Gerätekomponente und zumindest einer Kamera weist eine Einleseeinheit und eine Ausgabeeinheit auf. Die Einleseeinheit ist ausgebildet, um ein Kamerasignal von der Kamera einzulesen, wobei das Kamerasignal ein Abbild einer Hand eines Nutzers vor einem definierten Hintergrund repräsentiert. Die Ausgabeeinheit ist ausgebildet, um abhängig von dem Kamerasignal ein Steuersignal zum Bewegen der Gerätekomponente des Reinigungsgeräts auszugeben.

Die Kamera ist eine Innenraumkamera zum Überwachen eines Innenraums des Reinigungsgeräts. Das Reinigungsgerät kann als ein Haushaltgerät oder ein gewerbliches oder professionelles Gerät, beispielsweise eine Spülmaschine/Geschirrspülmaschine oder -anlage zum Reinigen von Geschirr, oder ein medizinisches Gerät, wie ein Reinigungs- oder Desinfektionsgerät, ein Kleinsterilisator, ein Großraumdesinfektor oder eine Container-Waschanlage ausgeformt sein. Wenn das Reinigungsgerät als eine Spülmaschine ausgeformt ist, kann die Kamera als Innenraumkamera beispielsweise zum Überwachen eines Spülraums des Reinigungsgeräts dienen. Die Bedienvorrichtung kann auch mehrere der Innenraumkameras und optional mehrere Außenkameras aufweisen. Das Kamerasignal kann das Abbild eines beliebigen Abschnitts der Hand des Nutzers vor dem definierten Hintergrund repräsentieren, das heißt, dass für die Kamera eine Anwesenheit der Hand vor dem definierten Hintergrund genügt, um das Kamerasignal zu erzeugen und beispielsweise keine definierte Stellung oder Geste der Hand vor dem Hintergrund notwendig ist, um das Kamerasignal zu erzeugen. Die Bedienvorrichtung kann auch als ein sogenannter "Klassifikator" bezeichnet werden oder einen solchen Klassifikator aufweisen, welcher ausgebildet ist, um unterschiedliche Kamerasignale von der Kamera zu klassifizieren, beispielsweise zu unterscheiden. Die Gerätekomponente kann eine von dem Nutzer bedienbare Gerätekomponente wie eine Gerätetür oder ein Geschirrkorb des Reinigungsgeräts sein. Die hier vorgestellte Bedienvorrichtung ermöglicht es, unter Verwendung eines optischen Musters, das sich aus einem definierten Bereich eines Hintergrundbilds und einem Bild der Hand des Nutzers zusammensetzt, ein Bewegen der Gerätekomponente auszulösen, beispielsweise ein Schließen und/oder Öffnen der Gerätetür und/oder ein Einfahren und/oder Ausfahren der Spülkörbe auszulösen. So kann vorteilhafterweise eine intuitiv betätigbare automatisierte Bedienung der Gerätekomponente für den Nutzer realisiert sein, wobei sich der Nutzer vorteilhafterweise keine bestimmten Gesten zum Bedienen des Reinigungsgeräts einprägen muss. Dank der Bedienvorrichtung kann für den Nutzer körperliche Anstrengung vermieden werden. Dies ist besonders im gewerblichen Anwendungsbereich bei häufigem Bedienen des Reinigungsgeräts von Vorteil.

Die Einleseeinheit kann ausgebildet sein, um ein erstes Kamerasignal einzulesen, das als das Abbild eine Hand eines Nutzers im Bereich eines Türstößels vor einer Beschickungsöffnung des Reinigungsgeräts repräsentiert, wobei die Ausgabeeinheit ausgebildet ist, um unter Verwendung des ersten Kamerasignals als das Steuersignal ein Türschließsignal zum Schließen einer Gerätetür des Reinigungsgeräts auszugeben. Das erste Kamerasignal kann von einer ersten Kamera des Reinigungsgeräts bereitgestellt werden, wobei die erste Kamera als eine Innenraumkamera ausgeformt sein kann. Wenn der definierte Hintergrund demnach die Beschickungsöffnung repräsentiert, kann darauf geschlossen werden, dass die Gerätetür offen ist, wenn die Innenraumkamera die Beschickungsöffnung abbildet. Die Anwesenheit der Hand des Nutzers im Bereich des Türstößels kann darauf hinweisen, dass die Bedienung der Gerätetür gewünscht ist. So kann eine automatisierte und einfach bedienbare Türschließfunktion für das Reinigungsgerät realisiert sein.

Die Einleseeinheit kann zusätzlich ausgebildet sein, um ein zweites Kamerasignal einzulesen, das als das Abbild eine Hand eines Nutzers im Bereich einer Anzeigeeinheit des Reinigungsgeräts vor einer extern von dem Reinigungsgerät angeordneten Umgebung repräsentiert, wobei die Ausgabeeinheit ausgebildet ist, um unter Verwendung des zweiten Kamerasignals als das Steuersignal ein Türöffnungssignal zum Öffnen einer Gerätetür des Reinigungsgeräts auszugeben. Das zweite Kamerasignal kann von einer zweiten Kamera des Reinigungsgeräts bereitgestellt werden, wobei die zweite Kamera als eine Außenkamera ausgeformt sein kann. Wenn der definierte Hintergrund demnach die Umgebung repräsentiert, kann darauf geschlossen werden, dass die Gerätetür geschlossen ist, wenn die Außenkamera diese Umgebung abbildet. Ein Fußboden, welcher bei geöffneter Gerätetür abgebildet würde, ist in diesem Zusammenhang nicht als Umgebung zu verstehen, die Umgebung ist vielmehr als eine Wohnumgebung zu verstehen, beispielsweise ein dem Reinigungsgerät gegenüber angeordneter definierter Wohnbereich wie ein gegenüber angeordnetes Möbelstück.

Die Einleseeinheit kann zusätzlich ausgebildet sein, um ein zweites oder weiteres zweites Kamerasignal einzulesen, das als das Abbild eines Fußes oder eines Schuhs eines Nutzers im Bereich einer Anzeigeeinheit des Reinigungsgeräts vor einem Fußboden repräsentiert, wobei die Ausgabeeinheit ausgebildet ist, um unter Verwendung des zweiten oder weiteren zweiten Kamerasignals als das Steuersignal ein Türschließsignal zum Schließen einer Gerätetür des Reinigungsgeräts auszugeben. Das zweite Kamerasignal kann von einer zweiten Kamera des Reinigungsgeräts bereitgestellt werden, wobei die zweite Kamera als eine Außenkamera ausgeformt sein kann. Wenn der definierte Hintergrund demnach den Fußboden repräsentiert, kann darauf geschlossen werden, dass die Gerätetür geöffnet ist, wenn die Außenkamera diese Umgebung abbildet.

Die Anzeigeeinheit kann Teil eines Bedienfelds des Reinigungsgeräts sein oder im Bereich eines solchen Bedienfeld angeordnet sein. Das Bedienfeld kann zur manuellen Einstellung von Reinigungsfunktionen des Reinigungsgeräts durch den Nutzer vorgesehen sein. Die Anwesenheit der Hand des Nutzers und/oder des Fußes oder eines Schuhs im Bereich der Anzeigeeinheit kann darauf hinweisen, dass die Bedienung der Gerätetür gewünscht ist. So kann eine automatisierte und einfach bedienbare Türöffnungs- und/oder Türschließfunktion für das Reinigungsgerät realisiert sein. Das Türöffnungssignal kann ausgebildet sein, um ein vollständiges Öffnen der Gerätetür oder lediglich ein Öffnen der Gerätetür um einen Spalt zu bewirken. Das Türschließsignal kann ausgebildet sein, um ein Schließen der Gerätetür oder ein Schließen der Gerätetür mit nachfolgendem automatischen Programmstart eines Spülprogramms zu bewirken.

Die Einleseeinheit kann zusätzlich oder alternativ ausgebildet sein, um ein weiteres Kamerasignal einzulesen, das als das Abbild eine Hand eines Nutzers im Bereich eines Geschirrkorbs des Reinigungsgeräts vor einer Beschickungsöffnung des Reinigungsgeräts repräsentiert, wobei die Ausgabeeinheit ausgebildet ist, um unter Verwendung des weiteren Kamerasignals als das Geschirrkorbsignal ein Geschirrkorbsignal zum Bewegen des Geschirrkorbs auszugeben. Das weitere Kamerasignal kann von der ersten Kamera oder einer weiteren ersten Kamera des Reinigungsgeräts bereitgestellt werden, wobei die weitere erste Kamera als eine weitere Innenraumkamera ausgeformt sein kann. Wenn der definierte Hintergrund demnach die Beschickungsöffnung repräsentiert, kann darauf geschlossen werden, dass die Gerätetür offen ist, wenn die Innenraumkamera die Beschickungsöffnung abbildet. Die Anwesenheit der Hand des Nutzers im Bereich des Geschirrkorbs kann darauf hinweisen, dass die Bedienung des Geschirrkorbs gewünscht ist. So kann eine automatisierte und einfach bedienbare Bewegungsfunktion für den Geschirrkorb realisiert sein.

Beispielsweise kann die Einleseeinheit ausgebildet sein, um als das weitere Kamerasignal ein erstes weiteres Kamerasignal einzulesen, das als das Abbild die Hand des Nutzers vor der Beschickungsöffnung im Bereich des Geschirrkorbs repräsentiert, der in einem aus einem Spülraum des Reinigungsgeräts herausragenden Zustand angeordnet ist, wobei die Ausgabeeinheit ausgebildet ist, um unter Verwendung des ersten weiteren Kamerasignal als das Geschirrkorbsignal ein erstes Geschirrkorbsignal zum Einfahren des Geschirrkorbs in den Spülraum auszugeben. Wenn der Geschirrkorb in dem aus einem Spülraum herausragenden Zustand angeordnet ist, ist anzunehmen, dass der Nutzer das Einfahren des Geschirrkorbs in den Spülraum wünscht. So kann eine automatisierte und einfach bedienbare Einfahrfunktion für den Geschirrkorb realisiert sein.

Gemäß einer Ausführungsform kann die Einleseeinheit zusätzlich oder alternativ dazu ausgebildet sein, um als das weitere Kamerasignal ein zweites weiteres Kamerasignal einzulesen, das als das Abbild die Hand des Nutzers vor der Beschickungsöffnung im Bereich des Geschirrkorbs repräsentiert, der in einem in dem Spülraum des Reinigungsgeräts hineingeschobenen Zustand angeordnet ist, wobei die Ausgabeeinheit ausgebildet ist, um unter Verwendung des zweiten weiteren Kamerasignals als das Geschirrkorbsignal ein zweites Geschirrkorbsignal zum Ausfahren des Geschirrkorbs aus dem Spülraum heraus auszugeben. Wenn der Geschirrkorb in dem in dem Spülraum des Reinigungsgeräts hineingeschobenen Zustand angeordnet ist, ist anzunehmen, dass der Nutzer das Ausfahren des Geschirrkorbs in den Spülraum wünscht. So kann eine automatisierte und einfach bedienbare Ausfahrfunktion für den Geschirrkorb realisiert sein. Wenn das Reinigungsgerät mehrere Spülkörbe aufweist, können unterschiedliche Regionen im Bereich der Spülkörbe, beispielsweise unterschiedliche Regionen im Spülraum, zur Ausgabe des ersten und/oder zweiten Geschirrkorbsignals definiert sein. Beispielsweise kann eine Ecke des Spülraums einem ersten Geschirrkorb und eine gegenüberliegende Ecke des Spülraums einem zweiten Geschirrkorb zugeordnet sein. Erkennt die Kamera die Hand des Nutzers in einer der beiden Ecken, wird der entsprechende Geschirrkorb ein- oder ausgefahren. Werden beide Bereiche gleichzeitig mit beiden Händen belegt, bewegt eine Korbbewegungsvorrichtung ansprechend auf das erste und/oder zweite Geschirrkorbsignal sowohl den ersten als auch den zweiten Geschirrkorb.

Es ist weiterhin von Vorteil, wenn die Einleseeinheit gemäß einer Ausführungsform ausgebildet ist, um das Kamerasignal bei Anliegen eines Programm-Beendungssignals, das ein beendetes oder unterbrochenes Reinigungsprogramms des Reinigungsgeräts repräsentiert, abzufragen. So kann sichergestellt werden, dass der Nutzer die Gerätekomponente unter Verwendung der Bedienvorrichtung bei beendetem oder abgebrochenem Programm automatisiert bewegen kann.

Die Einleseeinheit kann ferner ausgebildet sein, um von der Kamera ein Bildsignal einzulesen, das ein Kamerabild der Kamera repräsentiert, und unter Verwendung des Bildsignals eine von einer Bewegung der Gerätekomponente unabhängige Funktion des Reinigungsgeräts durchzuführen, insbesondere eine Einheit zur Beladungserkennung nach Art und/oder Menge, Verschmutzungserkennung, Trocknungsüberwachung und/oder Erkennung einer Spülarmblockade des Reinigungsgeräts anzusteuern. Das Bildsignal kann ein Kamerabild der Kamera repräsentieren, welches keine Hand abbildet und/oder eingelesen wird, wenn ein Betriebssignal anliegt, welches einen Reinigungsbetrieb des Reinigungsgeräts repräsentiert. So kann die Einleseeinheit ausgebildet sein, um Bildsignale der Kamera ferner für weitere Funktionen zu nutzen.

Ein Reinigungsgerät weist eine Bedienvorrichtung in einer der vorangehend beschriebenen Varianten und zumindest die eine bewegliche Gerätekomponente und zumindest die eine Kamera auf. Die Kamera ist zum Erfassen des Abbilds und Bereitstellen des das Abbild repräsentierende Kamerasignal ausgebildet. Ein hier vorgestelltes Reinigungsgerät kann als Ersatz für bekannte Reinigungsgeräte dienen, wobei das vorgestellte Reinigungsgerät vorteilhafterweise die Vorteile der Bedienvorrichtung realisiert.

Das Reinigungsgerät kann als eine Spülmaschine, auch "Geschirrspülmaschine" genannt, ausgeformt sein.

Ein Verfahren zum Bedienen eines Reinigungsgeräts mit zumindest einer Kamera und zumindest einer beweglichen Gerätekomponente weist einen Schritt des Einlesens und einen Schritt des Ausgebens auf. Im Schritt des Einlesens wird ein Kamerasignal von der Kamera eingelesen, wobei das Kamerasignal ein Abbild einer Hand eines Nutzers vor einem definierten Hintergrund repräsentiert. Im Schritt des Ausgebens wird ein Steuersignal zum Bewegen der Gerätekomponente des Reinigungsgeräts ausgegeben, abhängig von dem Kamerasignal.

Das Verfahren kann beispielsweise in Software oder Hardware oder in einer Mischform aus Software und Hardware, beispielsweise in der vorangehend beschriebenen Bedienvorrichtung, implementiert sein, die Teil eines Steuergeräts sein kann. Auch durch ein solches Verfahren können die bereits beschriebenen Vorteile der Vorrichtung technisch einfach und kostengünstig realisiert werden.

Von Vorteil ist auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ausführungsbeispiele des Ansatzes sind in den Zeichnungen rein schematisch dargestellt und werden nachfolgend näher beschrieben. Es zeigt
- Figur 1: eine seitliche Darstellung eines Reinigungsgeräts;
- Figur 2: eine perspektivische Darstellung eines Reinigungsgeräts mit einer Bedienvorrichtung gemäß einem Ausführungsbeispiel zum Bedienen des Reinigungsgeräts;
- Figur 3: eine seitliche Darstellung eines Reinigungsgeräts mit einer Bedienvorrichtung gemäß einem Ausführungsbeispiel;
- Figur 4: eine extern von dem Reinigungsgerät angeordnete Umgebung zur Verwendung für eine Bedienvorrichtung gemäß einem Ausführungsbeispiel;
- Figur 5: eine seitliche Darstellung eines Reinigungsgeräts mit einer Bedienvorrichtung gemäß einem Ausführungsbeispiel;
- Figur 6: eine seitliche Darstellung eines Reinigungsgeräts mit einer Bedienvorrichtung gemäß einem Ausführungsbeispiel;
- Figur 7: eine seitliche Darstellung eines Reinigungsgeräts mit einer Bedienvorrichtung gemäß einem Ausführungsbeispiel;
- Figur 8: eine perspektivische Frontdarstellung eines Reinigungsgeräts mit einer Bedienvorrichtung gemäß einem Ausführungsbeispiel;
- Figur 9: eine perspektivische Frontdarstellung eines Reinigungsgeräts mit einer Bedienvorrichtung 200 gemäß einem Ausführungsbeispiel;
- Figur 10: einen Ausschnitt einer perspektivischen Frontdarstellung eines Reinigungsgeräts mit einer Bedienvorrichtung gemäß einem Ausführungsbeispiel
- Figur 11: eine perspektivische Frontdarstellung eines Reinigungsgeräts mit einer Bedienvorrichtung gemäß einem Ausführungsbeispiel;
- Figur 12: eine schematische Darstellung einer Bedienvorrichtung gemäß einem Ausführungsbeispiel;
- Figur 13: ein Ablaufdiagramm eines Verfahrens gemäß einem Ausführungsbeispiel zum Bedienen eines Reinigungsgeräts mit zumindest einer Kamera und zumindest einer beweglichen Gerätekomponente; und
- Figur 14: ein Blockschaltbild eines Verfahrens gemäß einem Ausführungsbeispiel zum Bedienen eines Reinigungsgeräts.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

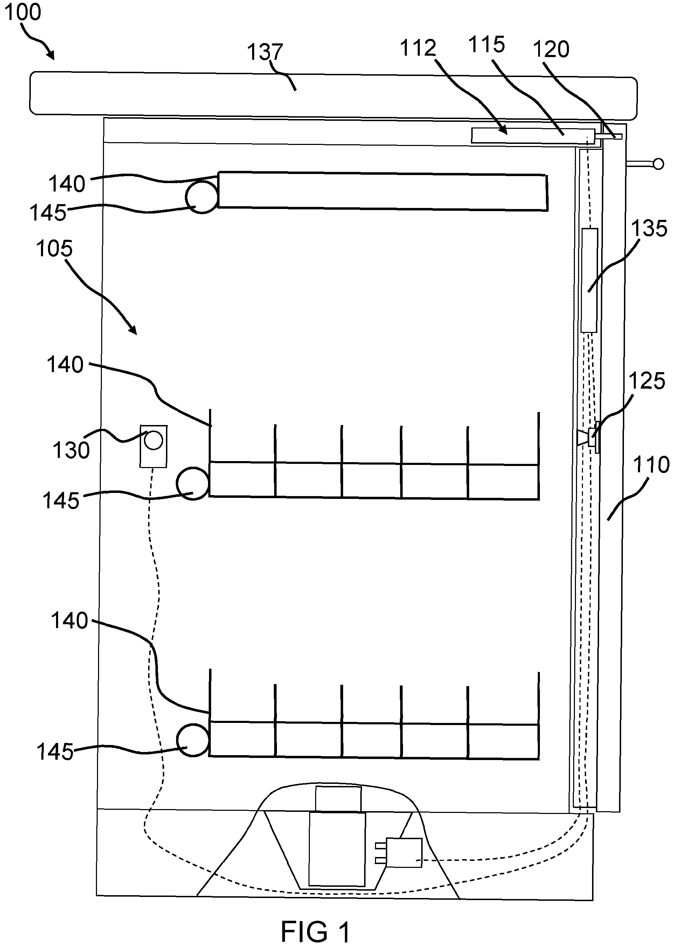

Figur 1 zeigt eine seitliche Darstellung eines Reinigungsgeräts 100.

Das Reinigungsgerät 100 ist als eine Spülmaschine/Geschirrspüler ausgeformt und weist einen Spülraum 105 zur Aufnahme und Reinigung von Geschirr, eine Gerätetür 110 zum Öffnen und Schließen des Spülraums 105, eine automatische Türbewegungsvorrichtung 112 mit einer Türöffnungsvorrichtung 115 mit einem Türstößel 120, eine hier beispielhaft in den Spülraum 105 gerichtete Innenraumkamera 125, eine in dem Spülraum 105 angeordnete Beleuchtungseinrichtung 130, eine Gerätesteuerung 135 und/oder eine Arbeitsplatte 137 auf. Die Türöffnungsvorrichtung 115 weist beispielhaft ein Türschloss, eine Kamera und/oder einen Motor auf.

In dem Spülraum 105 sind hier beispielhaft drei Geschirrkörbe 140 angeordnet, die darüber hinaus mit einer Korbbewegungsvorrichtung 145 automatisch ein- und ausfahrbar sind. Mittels der Türöffnungseinrichtung 115 mit Türstößel 120 kann die Gerätetür 110 automatisch geöffnet werden. Mittels der automatischen Türbewegungsvorrichtung 112 kann die Gerätetür 110 automatisch geschlossen werden. Bedienvorgänge können beispielsweise durch Gesten ausgelöst werden. Um die Gesten durch die Hand eines Bedieners zu erfassen, befindet sich im Bedienfeld des Geschirrspülers bzw. des Haushaltsgeräts in der Regel eine Kamera. Über alles betrachtet sind die Korbbewegungsvorrichtung 145, Türbewegungsvorrichtung 112 und/oder Türöffnungsvorrichtung 115 durch körperlich vorhandene Sensoren aktivierbar. Die Bewegung der automatisierten Korbbewegungsvorrichtung 145, Türbewegungsvorrichtung 112 und/oder Türöffnungsvorrichtung 115 wird durch eine Auslösesensorik aktiviert. Diese Auslösesensorik ist nicht direkt sichtbar, nicht intuitiv bedienbar und oft auch nicht als solche identifizierbar. Für die unterschiedlichen automatisierten Vorrichtungen 112, 115, 145 sind demnach unterschiedliche Sensoren vorgesehen.

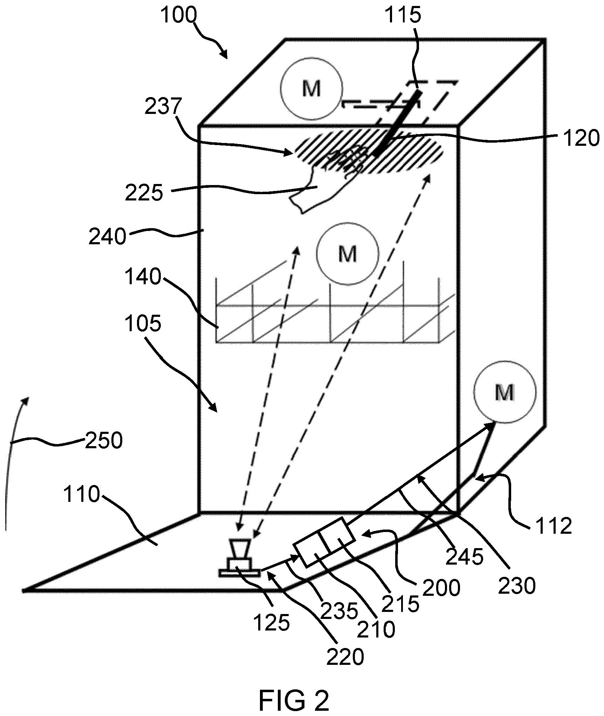

Figur 2 zeigt eine perspektivische Darstellung eines Reinigungsgeräts 100 mit einer Bedienvorrichtung 200 gemäß einem Ausführungsbeispiel zum Bedienen des Reinigungsgeräts 100. Bei dem Reinigungsgerät 100 kann es sich um das in Fig. 1 beschriebene Reinigungsgerät 100 handeln. Anders als in Fig. 1 beschrieben, werden dank der Bedienvorrichtung 200 mittels einer Mustererkennung aus einem spezifischen Hintergrundbild und der Hand 225 des Bedieners die Bewegungsvorgänge der automatisierten Türbewegungsvorrichtung 112, Türöffnungsvorrichtung 115 und/oder Korbbewegungsvorrichtung 145 des Reinigungsgeräts 100 ausgelöst.

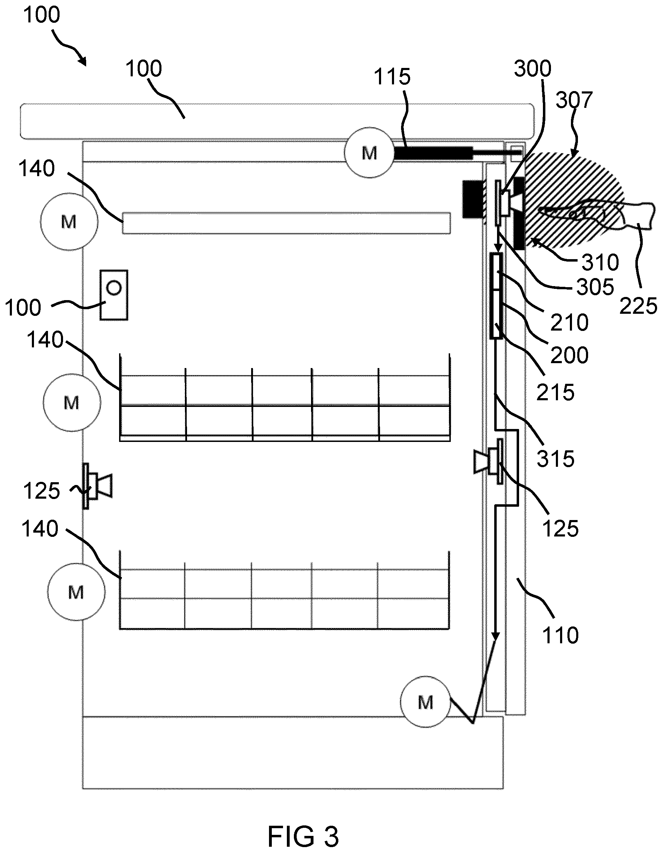

Lediglich beispielhaft ist die Bedienvorrichtung 200 gemäß diesem Ausführungsbeispiel in oder an dem Reinigungsgerät 100 angeordnet, beispielsweise in die in Fig. 1 beschriebene Gerätesteuerung des Reinigungsgeräts 100 implementiert. Das Reinigungsgerät 100 weist zumindest eine bewegliche Gerätekomponente, hier in Form der Gerätetür 110 und/oder zumindest eines Geschirrkorbs 140, und zumindest eine Kamera auf, die hier als die Innenraumkamera 125 ausgeformt ist. Hier in Fig. 2 ist ein Anwendungsbeispiel der Bedienvorrichtung 200 unter Verwendung der in Fig. 1 beschriebenen Innenraumkamera 125 des Reinigungsgeräts 100 beschrieben. Die Innenraumkamera 125 ist gemäß diesem Ausführungsbeispiel an einer dem Spülraum 105 zugewandten Innenseite der Gerätetür 110 angeordnet. Zusätzlich ist die Bedienvorrichtung 200 unter Verwendung einer beispielsweise in Fig. 3 gezeigten Außenkamera zum Überwachen einer außerhalb des Reinigungsgeräts 100 angeordneten Umgebung des Reinigungsgeräts 100 ansteuerbar.

Die Bedienvorrichtung 200 weist eine Einleseeinheit 210 und eine Ausgabeeinheit 215 auf. Die Einleseeinheit 210 ist ausgebildet, um ein Kamerasignal 220 von der Kamera 125 einzulesen, wobei das Kamerasignal 220 ein Abbild einer Hand 225 eines Nutzers vor einem definierten Hintergrund repräsentiert. Die Ausgabeeinheit 215 ist ausgebildet, um abhängig von dem Kamerasignal 220 ein Steuersignal 230 zum Bewegen der Gerätekomponente des Reinigungsgeräts 100 auszugeben.

Das Reinigungsgerät 100 ist gemäß unterschiedlichen Ausführungsbeispielen entweder als ein Haushaltgerät oder ein gewerbliches oder professionelles Gerät ausgeformt. Das Kamerasignal 220 repräsentiert gemäß diesem Ausführungsbeispiel das Abbild eines beliebigen Abschnitts der Hand 225 des Nutzers vor dem definierten Hintergrund, das heißt, dass für die Kamera 125 eine Anwesenheit der Hand 225 vor dem definierten Hintergrund genügt, um das Kamerasignal 220 zu erzeugen und beispielsweise keine definierte Stellung oder Geste der Hand 225 vor dem Hintergrund notwendig ist, um das Kamerasignal 220 zu erzeugen.

Die Einleseeinheit 210 ist gemäß diesem Ausführungsbeispiel ausgebildet, um ein erstes Kamerasignal 235 einzulesen, das als das Abbild eine Hand 225 eines Nutzers im Bereich 237 des Türstößels 120 vor einer Beschickungsöffnung 240 des Reinigungsgeräts 100 repräsentiert, wobei die Ausgabeeinheit 215 ausgebildet ist, um unter Verwendung des ersten Kamerasignals 235 als das Steuersignal 230 ein Türschließsignal 245 zum Schließen 250 einer Gerätetür 110 des Reinigungsgeräts 100 auszugeben. Das erste Kamerasignal 235 wird gemäß diesem Ausführungsbeispiel von der Innenraumkamera 125 bereitgestellt. Zum Öffnen und/oder Schließen 250 der Gerätetür weist die Türbewegungsvorrichtung 112 die Türöffnungseinrichtung 115 mit zumindest einem mit der Gerätetür 110 gekoppelten Motor M und/oder einem mit dem Türstößel 120 gekoppelten Motor M auf.

Die Einleseeinheit 210 ist gemäß diesem Ausführungsbeispiel ausgebildet, um das Kamerasignal 220 bei Anliegen eines Programm-Beendungssignals, das ein beendetes oder unterbrochenes Reinigungsprogramms des Reinigungsgeräts 100 repräsentiert, abzufragen. Ferner ist die Einleseeinheit 210 gemäß diesem Ausführungsbeispiel ausgebildet, um von der Innenraumkamera 125 und/oder Außenkamera ein Bildsignal einzulesen, das ein Kamerabild der Innenraumkamera 125 und/oder Außenkamera repräsentiert, und unter Verwendung des Bildsignals eine von einer Bewegung der Gerätekomponente unabhängige Funktion des Reinigungsgeräts 100 durchzuführen, insbesondere eine Einheit zur Beladungserkennung nach Art und/oder Menge, Verschmutzungserkennung, Trocknungsüberwachung und/oder Erkennung einer Spülarmblockade des Reinigungsgeräts anzusteuern. Das Bildsignal repräsentiert gemäß einem Ausführungsbeispiel ein Kamerabild der Innenraumkamera 125 und/oder Außenkamera, welches keine Hand abbildet und/oder eingelesen wird, wenn ein Betriebssignal anliegt, welches einen Reinigungsbetrieb des Reinigungsgeräts 100 repräsentiert.

Im Folgenden werden Ausführungsbeispiele anhand der Figur 2 nochmals mit anderen Worten beschrieben:
Die hier vorgestellte Bedienvorrichtung 200 ermöglicht es im Zusammenhang mit zumindest einer Kamera 125, die für den Gebrauch mit einem Geschirrspüler vorgesehen ist, einen automatisierten Geschirrspüler mit virtuellen Sensoren zu realisieren.

Automatisierte Vorrichtungen in Geschirrspülern, wie z. B. eine automatische Türschließvorrichtung und/oder Türöffnungseinrichtung 115, tragen maßgeblich zu einer Verbesserung des Bedienkomforts bei. Die Aktivierung dieser automatisierten Vorrichtungen geschieht dank der Bedienvorrichtung 200 über Sensoren, die nicht unmittelbar sichtbar und nicht als solche erkennbar, aber intuitiv bedienbar sind. Die hier vorgestellte Bedienvorrichtung 200 ermöglicht es vorteilhafterweise, dass die Auslösesensorik bezüglich der Zugänglichkeit, Sichtbarkeit und Bedienbarkeit eine Verbesserung erfährt.

Ein Kerngedanke des hier vorgestellten Ansatzes liegt darin, das Schließen 250 und Öffnen der Gerätetür 110 und/oder das Ein- und Ausfahren der Körbe 140 durch die Erkennung eines spezifischen optischen Musters, das sich aus einem definierten Bereich eines Hintergrundbilds und dem Bild der Hand 225 und/oder eines Fußes bzw. Schuhs des Bedieners zusammensetzt, auszulösen. Der spezifische Bereich aus dem Hintergrundbild stellt dabei einen virtuellen Sensor oder eine virtuelle Zone, hier der Bereich 237, dar, der/die , etwa durch die Überdeckung mit dem Bild der Bedienerhand 225, virtuell betätigt wird. Das Hintergrundbild und die Bedienerhand 225 werden dabei wenigstens von einer vorzugsweise in der Innenseite in der Gerätetür 110 angeordneten Kamera, hier der Innenraumkamera 125, erfasst.

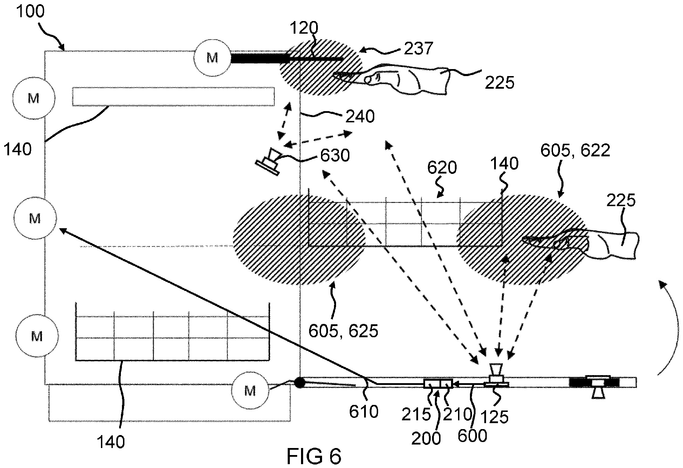

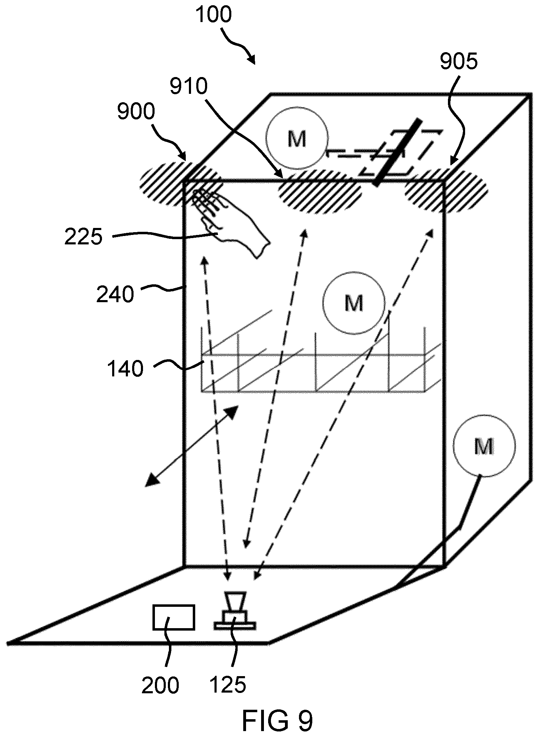

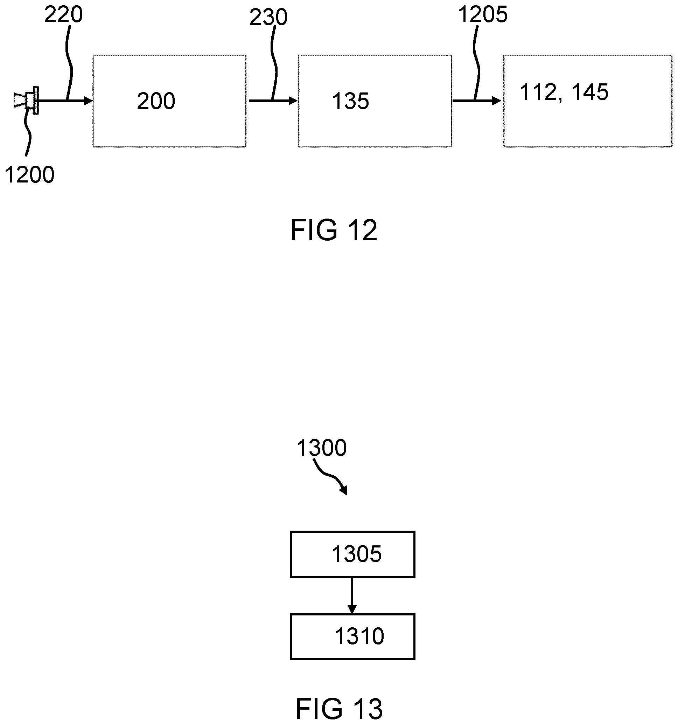

Die virtuellen Sensoren/virtuellen Zonen sind dabei gemäß diesem Ausführungsbeispiel im oberen Bereich der Beschickungsöffnung 240 und/oder in den beiden Ecken und/oder in der Mitte vorgesehen, siehe hierzu auch die Figuren 9 bis 11. Weitere virtuelle Sensoren/Zonen befinden sich gemäß einem Ausführungsbeispiel vor den Geschirrkörben 140, in der Fig. 2 bespielhaft am oberen Geschirrkorb 140 gezeigt, siehe auch Fig. 6. Ein weiterer virtueller Sensor/Zone mit einer Außenkamera ist gemäß einem Ausführungsbeispiel im Bedienfeld positioniert, siehe Fig. 3. Die Innenraumkamera 125 erfasst bei geöffneter Tür 110 das Hintergrundbild, in der Fig. 2 ist dies die Beschickungsöffnung 240 bzw. deren Kontur mit den Körben 140 und dem Türstößel 120, sowie die Hand 225 des Bedieners, wenn diese vor den virtuellen Sensor, hier vor den Bereich 237, bewegt wird. Das spezifische Muster aus Hintergrundbild und Hand 225 wird von der Bedienvorrichtung 200, beispielsweise unter Verwendung eines Klassifikators, ausgewertet, der gemäß einem Ausführungsbeispiel mit der Gerätesteuerung kommuniziert, wie auch in Fig. 12 prinzipiell gezeigt. Die Gerätesteuerung oder die Bedienvorrichtung 200 schaltet dann gemäß einem Ausführungsbeispiel in Abhängigkeit des erkannten Musters die Türbewegungsvorrichtung 112 oder die jeweilige Korbbewegungsvorrichtung ein. Bei geöffneter Tür 110 erkennt die Innenraumkamera 125 die Beschickungsöffnung 240 sowie den ausgefahrenen Türstößel 120. Bewegt der Bediener seine Hand 225 vor oder in den Bereich 237 des Türstößels 120, erkennt der Klassifikator/die Bedieneinrichtung 200 dieses spezifische Muster bzw. Bild und schaltet vorzugsweise die Türbewegungsvorrichtung 112 ein und die Gerätetür 110 wird geschlossen.

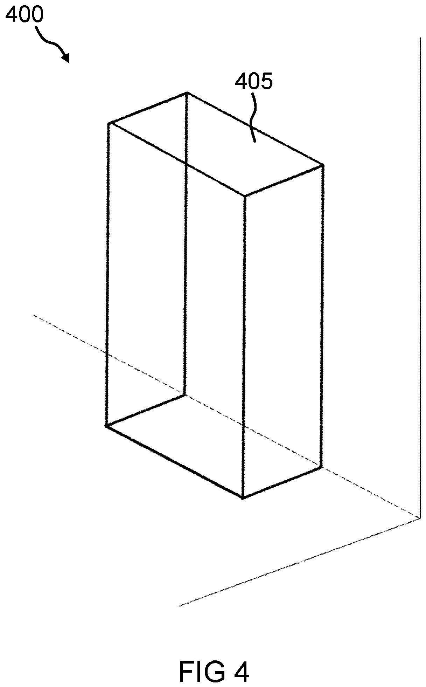

Vorteile der hier vorgestellten Bedienvorrichtung 200 sind:
- Es wird keine zusätzliche Auslösesensorik zum Aktivieren der Türbewegungsvorrichtung 112 und/oder der Korbbewegungsvorrichtung benötigt. Je nach Ausführungsform wäre diese zusätzliche Auslösesensorik teuer und/oder störanfällig.
- Es sind für das Auslösen der Türbewegungsvorrichtung 112 und der Korbbewegungsvorrichtung keine unterschiedlichen Gesten notwendig, d. h. der Bediener muss sich keine unterschiedlichen Gesten merken.
- Das System ist an den individuellen Hintergrund, bzw. an die individuelle Umgebung, siehe Fig. 4, anpassbar.
- Die Gefahr einer Fehlbedienung wird minimiert, da immer zwei Muster abgefragt werden, nämlich die entsprechende zu bewegende Komponente, beispielsweise die Tür 110, der Korb 140 etc., und die Hand 225 des Bedieners, und es wird nicht zwischen unterschiedlichen Gesten differenziert, um die Bewegung der Komponenten bzw. der Tür 110 oder der Körbe 140 auszulösen.
- Es wird von der Bedienvorrichtung 200 nicht nur eine Hand 225/Geste erkannt, sondern diese in Zusammenhang mit einem vorgegebenen Hintergrundbild, welches etwa von der Öffnungsstellung der Tür 110 oder der Korbposition des Korbs 140 abhängt.

Figur 3 zeigt eine seitliche Darstellung eines Reinigungsgeräts 100 mit einer Bedienvorrichtung 200 gemäß einem Ausführungsbeispiel. Dabei kann es sich um das anhand von Figur 1 oder 2 beschriebene Reinigungsgerät 100 und die in Fig. 2 beschriebene Bedienvorrichtung 200 handeln, mit dem Unterschied, dass das Reinigungsgerät 100 gemäß diesem Ausführungsbeispiel mehrere der Innenraumkameras 125 und/oder zumindest eine oder mehrere Außenkameras 300 aufweist. Die Außenkamera 300 ist gemäß diesem Ausführungsbeispiel an einer dem Spülraum abgewandten Außenseite der Gerätetür 110 angeordnet.

Die Einleseeinheit 210 ist gemäß diesem Ausführungsbeispiel ausgebildet, um ein zweites Kamerasignal 305 einzulesen, das als das Abbild eine Hand 225 eines Nutzers im Bereich 307 einer Anzeigeeinheit 310 des Reinigungsgeräts 100 vor einer extern von dem Reinigungsgerät 100 angeordneten Umgebung repräsentiert, wobei die Ausgabeeinheit 215 ausgebildet ist, um unter Verwendung des zweiten Kamerasignals 305 als das Steuersignal ein Türöffnungssignal 315 zum Öffnen der Gerätetür 110 des Reinigungsgeräts 100 auszugeben. Das zweite Kamerasignal 305 wird gemäß diesem Ausführungsbeispiel von der Außenkamera 300 bereitgestellt. Die extern von dem Reinigungsgerät 100 angeordnete Umgebung ist in Fig. 4 gezeigt und als eine Wohnumgebung des Reinigungsgeräts 100 zu verstehen, beispielsweise ein dem Reinigungsgerät 100 gegenüber angeordneter definierter Wohnbereich wie ein gegenüber angeordnetes Möbelstück. Die Anzeigeeinheit 310 ist gemäß einem Ausführungsbeispiel Teil eines Bedienfelds des Reinigungsgeräts 100 oder im Bereich eines solchen Bedienfelds angeordnet. Das Bedienfeld ist gemäß einem Ausführungsbeispiel zur manuellen Einstellung von Reinigungsfunktionen des Reinigungsgeräts 100 durch den Nutzer vorgesehen. Das Türöffnungssignal 315 ist gemäß unterschiedlichen Ausführungsbeispielen ausgebildet, um ein vollständiges Öffnen der Gerätetür 110 oder lediglich ein Öffnen der Gerätetür 110 um einen Spalt zu bewirken.

In anderen Worten ausgedrückt befindet sich in dem hier gezeigten Ausführungsbeispiel eine weitere Kamera, hier die Außenkamera 300, im Bedienfeld des Geschirrspülers. Der virtuelle Sensor wird jetzt aus einem in Fig. 4 gezeigten Vordergrundbild des Geschirrspülers, das z. B. ein spezifisches Küchenmöbel enthält, gebildet. Wird die Hand 225 des Bedieners vor den virtuellen Sensor, hier in den Bereich 307, gehalten, öffnet die Türöffnungseinrichtung 115 die Gerätetür 110 in einem ersten Ausführungsbeispiel spaltweise, in einem zweiten Ausführungsbeispiel wird die Gerätetür 110 von der Türbewegungsvorrichtung zusätzlich noch ganz geöffnet bzw. in die horizontale Lage bewegt, um beispielsweise die Körbe 140 beladen zu können.

Figur 4 zeigt eine extern von dem Reinigungsgerät 100 angeordnete Umgebung 400 zur Verwendung für eine Bedienvorrichtung gemäß einem Ausführungsbeispiel. Dabei kann es sich um die in Fig. 3 beschriebene Bedienvorrichtung handeln.

Das in Fig. 3 beschriebene zweite Kamerasignal repräsentiert gemäß diesem Ausführungsbeispiel ein Abbild einer Hand eines Nutzers im Bereich einer Anzeigeeinheit des Reinigungsgeräts vor der hier gezeigten extern von dem Reinigungsgerät 100 angeordneten Umgebung 400. Die Umgebung 400 repräsentiert gemäß diesem Ausführungsbeispiel eine Wohnumgebung des Reinigungsgeräts 100, beispielsweise ein dem Reinigungsgerät 100 gegenüber angeordneter definierter Wohnbereich wie ein gegenüber angeordnetes Möbelstück 405. In dem Abbild der Umgebung 400 ist kein Bereich des Reinigungsgeräts abgebildet.

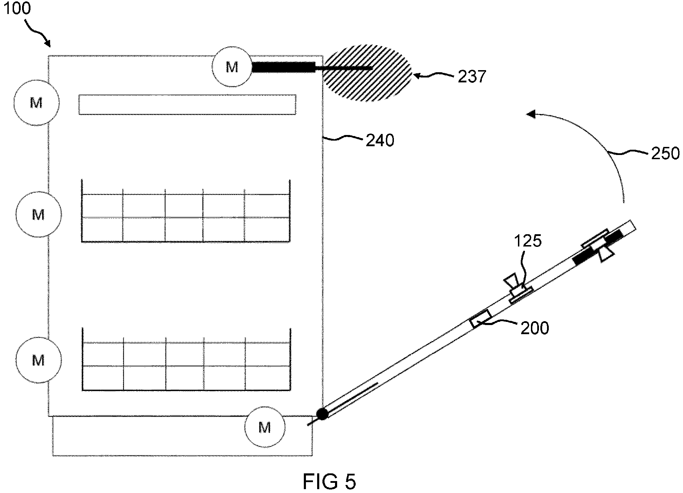

Figur 5 zeigt eine seitliche Darstellung eines Reinigungsgeräts 100 bei halb geöffneter Tür mit einer Bedienvorrichtung 200 gemäß einem Ausführungsbeispiel. Dabei kann es sich um das in Fig. 2 oder 3 beschriebene Reinigungsgerät 100 mit der Bedienvorrichtung 200 handeln.

Figur 6 zeigt eine seitliche Darstellung eines Reinigungsgeräts 100 mit einer Bedienvorrichtung 200 gemäß einem Ausführungsbeispiel. Dabei kann es sich um das in Fig. 2, 3 oder 5 beschriebene Reinigungsgerät 100 mit der Bedienvorrichtung 200 handeln.

Die Einleseeinheit 210 ist gemäß diesem Ausführungsbeispiel ausgebildet, um ein weiteres Kamerasignal 600 einzulesen, das als das Abbild eine Hand 225 eines Nutzers im Bereich 605 eines Geschirrkorbs 140 des Reinigungsgeräts 100 vor einer Beschickungsöffnung 240 des Reinigungsgeräts 100 repräsentiert, wobei die Ausgabeeinheit 215 ausgebildet ist, um unter Verwendung des weiteren Kamerasignals 600 als das Steuersignal ein Geschirrkorbsignal 610 zum Bewegen des Geschirrkorbs 140 auszugeben. Das weitere Kamerasignal 600 wird gemäß diesem Ausführungsbeispiel von der Innenraumkamera 125 bereitgestellt.

Zum Bewegen des Geschirrkorbs 140 weist das Reinigungsgerät 100 gemäß diesem Ausführungsbeispiel die in Fig. 1 beschriebene Korbbewegungsvorrichtung mit zumindest einem mit dem Geschirrkorb 140 gekoppelten Motor M auf. Gemäß diesem Ausführungsbeispiel weist das Reinigungsgerät 100 drei Spülkörbe 140 auf und die Korbbewegungsvorrichtung je einen Motor M pro Geschirrkorb 140 auf.

Die Einleseeinheit 210 ist gemäß diesem Ausführungsbeispiel ausgebildet, um als das weitere Kamerasignal 600 ein erstes weiteres Kamerasignal einzulesen, das als das Abbild die Hand 225 des Nutzers vor der Beschickungsöffnung 240 im Bereich des Geschirrkorbs 140 repräsentiert, der in einem aus einem Spülraum des Reinigungsgeräts 100 herausragenden Zustand 620 angeordnet ist, wobei die Ausgabeeinheit 215 ausgebildet ist, um unter Verwendung des ersten weiteren Kamerasignal als das Geschirrkorbsignal 610 ein erstes Geschirrkorbsignal zum Einfahren des Geschirrkorbs 140 in den Spülraum auszugeben. Das erste weitere Kamerasignal wird gemäß diesem Ausführungsbeispiel von der Innenraumkamera 125 ausgegeben, wenn die Hand 225 in einem von der Beschickungsöffnung 240 entfernten Bereich 622 im Bereich 605 des Geschirrkorbs 140 angeordnet ist.

Gemäß diesem Ausführungsbeispiel ist die Einleseeinheit 210 zusätzlich oder alternativ dazu ausgebildet, um als das weitere Kamerasignal 600 ein zweites weiteres Kamerasignal einzulesen, das als das Abbild die Hand 225 des Nutzers vor der Beschickungsöffnung 240 im Bereich des Geschirrkorbs 140 repräsentiert, der in einem in dem Spülraum des Reinigungsgeräts 100 hineingeschobenen Zustand angeordnet ist, wobei die Ausgabeeinheit 215 ausgebildet ist, um unter Verwendung des zweiten weiteren Kamerasignals als das Geschirrkorbsignal 610 ein zweites Geschirrkorbsignal zum Ausfahren des Geschirrkorbs 140 aus dem Spülraum heraus auszugeben. Das zweite weitere Kamerasignal wird gemäß diesem Ausführungsbeispiel von der Innenraumkamera 125 ausgegeben, wenn die Hand 225 in einem der Beschickungsöffnung 240 zugewandten Beschickungsbereich 625 im Bereich 605 des Geschirrkorbs 140 angeordnet ist.

Wenn das Reinigungsgerät 100 wie hier dargestellt, mehrere Spülkörbe 140 aufweist, sind gemäß einem Ausführungsbeispiel unterschiedliche Regionen im Bereich der Spülkörbe 140, beispielsweise unterschiedliche Regionen im Spülraum, zur Ausgabe des ersten und/oder zweiten Geschirrkorbsignals definiert. Beispielsweise ist gemäß einem Ausführungsbeispiel eine Ecke des Spülraums einem ersten Geschirrkorb und eine gegenüberliegende Ecke des Spülraums einem zweiten Geschirrkorb zugeordnet. Erkennt die Kamera 125 die Hand 225 des Nutzers in einer der beiden Ecken, wird der entsprechende Geschirrkorb 140 ein- oder ausgefahren. Werden beide Bereiche gleichzeitig mit beiden Händen 225 belegt, bewegt die Korbbewegungsvorrichtung ansprechend auf das erste und/oder zweite Geschirrkorbsignal sowohl den ersten als auch den zweiten Geschirrkorb 140, siehe auch Fig. 9.

Das Reinigungsgerät 100 weist gemäß diesem Ausführungsbeispiel zumindest eine weitere Innenraumkamera 630 auf, welche auf den Türstößel 120 gerichtet und/oder in dem Spülraum angeordnet ist. Die Einleseeinheit 210 ist gemäß diesem Ausführungsbeispiel ausgebildet, um das in Figur 2 beschriebene erste Kamerasignal und/oder das in Figur 3 beschriebene zweite Kamerasignal von der weiteren Innenraumkamera 630 einzulesen.

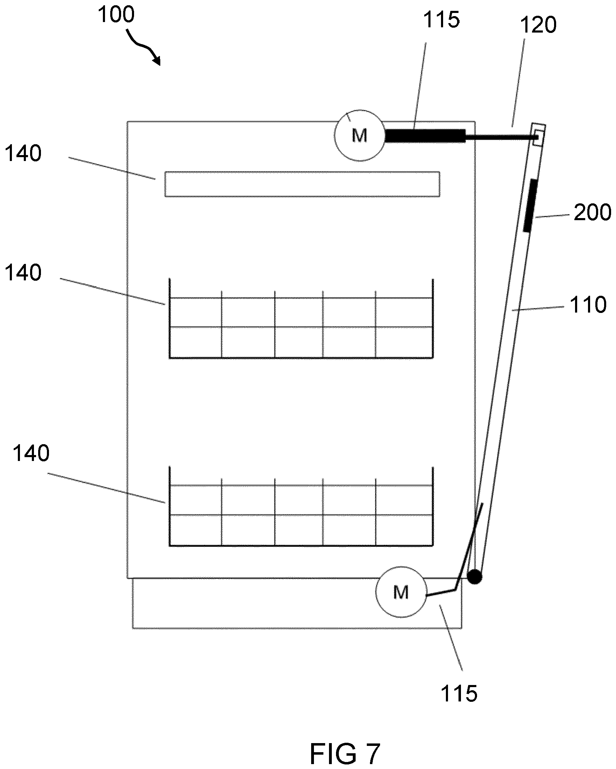

Figur 7 zeigt eine seitliche Darstellung eines Reinigungsgeräts 100 mit einer Bedienvorrichtung 200 gemäß einem Ausführungsbeispiel. Dabei kann es sich um das in Fig. 2, 3 oder 6 beschriebene Reinigungsgerät 100 mit der Bedienvorrichtung 200 handeln.

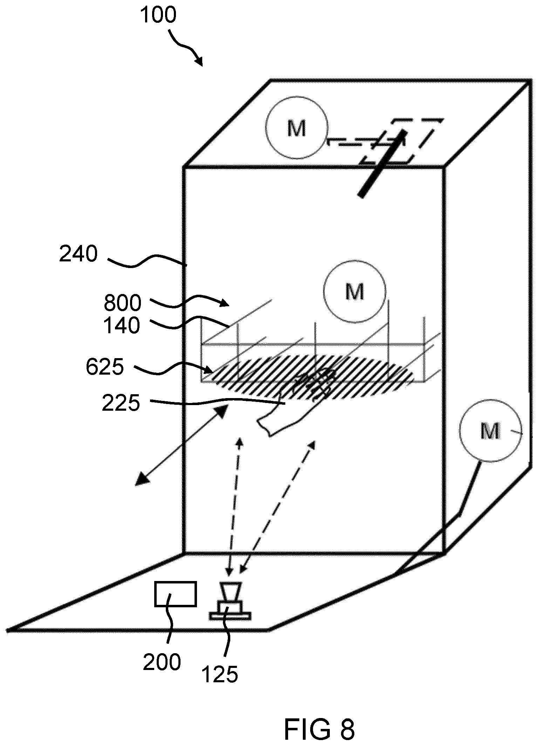

Figur 8 zeigt eine perspektivische Frontdarstellung eines Reinigungsgeräts 100 mit einer Bedienvorrichtung 200 gemäß einem Ausführungsbeispiel. Dabei kann es sich um das in Fig. 6 beschriebene Reinigungsgerät 100 mit der Bedienvorrichtung 200 handeln, mit dem Unterschied, dass der Geschirrkorb 140 gemäß diesem Ausführungsbeispiel in dem in den Spülraum hineingeschobenen Zustand 800 angeordnet ist und die Hand 225 in dem Beschickungsbereich 625 angeordnet ist.

Die Einleseeinheit 210 liest gemäß diesem Ausführungsbeispiel als das weitere Kamerasignal das zweite weitere Kamerasignal ein, das als das Abbild die Hand 225 des Nutzers vor der Beschickungsöffnung 240 im Bereich des Geschirrkorbs 140 repräsentiert, der in dem in dem Spülraum des Reinigungsgeräts 100 hineingeschobenen Zustand 800 angeordnet ist, wobei die Ausgabeeinheit ausgebildet ist, um unter Verwendung des zweiten weiteren Kamerasignals als das Geschirrkorbsignal ein zweites Geschirrkorbsignal zum Ausfahren des Geschirrkorbs 140 aus dem Spülraum heraus auszugeben.

In dem hier gezeigten Ausführungsbeispiel sind auch den Geschirrkörben 140 je virtuelle Sensoren bzw. virtuelle Zonen, hier der Beschickungsbereich 625, zugeordnet, wie hier am Beispiel des oberen Geschirrkorbs 140 gezeigt. Auch in diesem Ausführungsbeispiel erkennt die Innenraumkamera 125 die Beschickungsöffnung 240 mit den eingeschobenen oder ausgezogenen Körben 140. Bewegt der Bediener seine Hand 225 vor den oberen Geschirrkorb 140, wird der Korb je nach Position von der Korbbewegungsvorrichtung ein- oder ausgefahren.

Figur 9 zeigt eine perspektivische Frontdarstellung eines Reinigungsgeräts 100 mit einer Bedienvorrichtung 200 gemäß einem Ausführungsbeispiel. Dabei kann es sich um das in Fig. 6, 7 oder 8 beschriebene Reinigungsgerät 100 mit der Bedienvorrichtung 200 handeln, mit dem Unterschied, dass die Hand 225 gemäß diesem Ausführungsbeispiel in einer oberen Ecke 900 der Beschickungsöffnung 240 angeordnet ist.

Die obere Ecke 900 der Beschickungsöffnung 240 ist gemäß diesem Ausführungsbeispiel einem der hier beispielhaft drei Geschirrkörbe 140 zugeordnet, sodass die Innenraumkamera 125 gemäß diesem Ausführungsbeispiel das erste und/oder zweite Geschirrkorbsignal zum Bewegen eines ersten Geschirrkorbs 140 an die Einleseeinheit bereitstellt, wenn das Abbild die Hand 225 eines Nutzers im Bereich der oberen Ecke 900 vor der Beschickungsöffnung 240 repräsentiert.

Die Innenraumkamera 125 stellt ferner gemäß diesem Ausführungsbeispiel das erste und/oder zweite Geschirrkorbsignal zum Bewegen eines zweiten Geschirrkorbs 140 an die Einleseeinheit bereit, wenn das Abbild die Hand 225 eines Nutzers im Bereich einer gegenüberliegenden oberen Ecke 905 vor der Beschickungsöffnung 240 repräsentiert.

Die Innenraumkamera 125 stellt ferner gemäß diesem Ausführungsbeispiel das erste und/oder zweite Geschirrkorbsignal zum Bewegen eines dritten Geschirrkorbs 140 an die Einleseeinheit bereit, wenn das Abbild die Hand 225 eines Nutzers im Bereich einer oberen Mitte 910 vor der Beschickungsöffnung 240 repräsentiert.

In anderen Worten ausgedrückt, sind gemäß diesem Ausführungsbeispiel obere Bereiche der Beschickungsöffnung 240, insbesondere die beiden Ecken 900, 905 mit virtuellen Sensoren/Zonen belegt. Vorzugsweise ist gemäß diesem Ausführungsbeispiel die linke Ecke 900 dem oberen Geschirrkorb 140 und die rechte Ecke 905 dem hier nicht gezeigten unteren Geschirrkorb, zugeordnet. Erkennt die Kamera 125 die Hand 225 des Bedieners in einer der beiden Ecken 900, 905, wird der entsprechende Geschirrkorb 140 ein- oder ausgefahren. Werden beide Bereiche 900, 905 gleichzeitig mit beiden Händen 225 belegt, bewegt die Korbbewegungsvorrichtung sowohl den unteren als auch oberen Geschirrkorb 140.

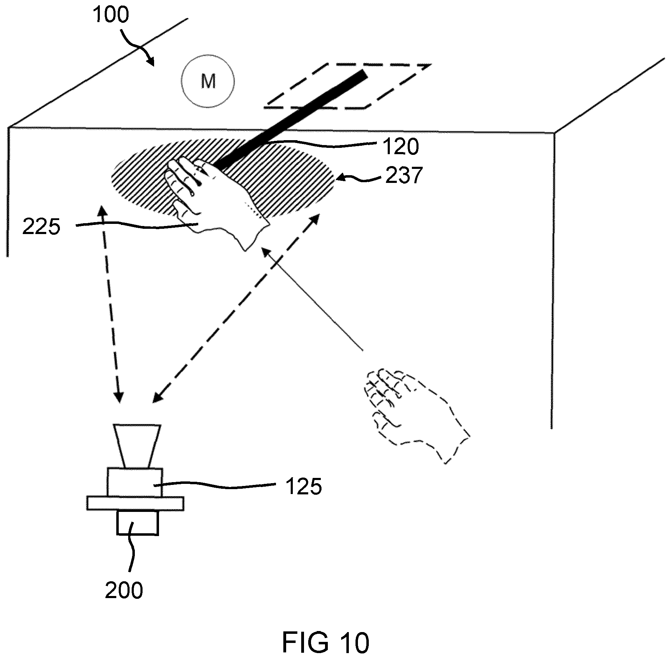

Figur 10 zeigt einen Ausschnitt einer perspektivischen Frontdarstellung eines Reinigungsgeräts 100 mit einer Bedienvorrichtung 200 gemäß einem Ausführungsbeispiel. Dabei kann es sich um das in einer der Figuren 2, 3, 5, 6, 7, 8 oder 9 beschriebene Reinigungsgerät 100 mit der Bedienvorrichtung 200 handeln.

Die Hand 225 ist gemäß diesem Ausführungsbeispiel im Bereich 237 des Türstößels 120 angeordnet. Die Fig. 10 verdeutlicht den hier vorgestellten Ansatz am Beispiel des Schließens der Gerätetür ausgelöst durch das Erkennen der Bedienerhand 225 am virtuellen Sensor bzw. in der virtuellen Zone, hier der Bereich 237, im Bereich des Türstößels 120.

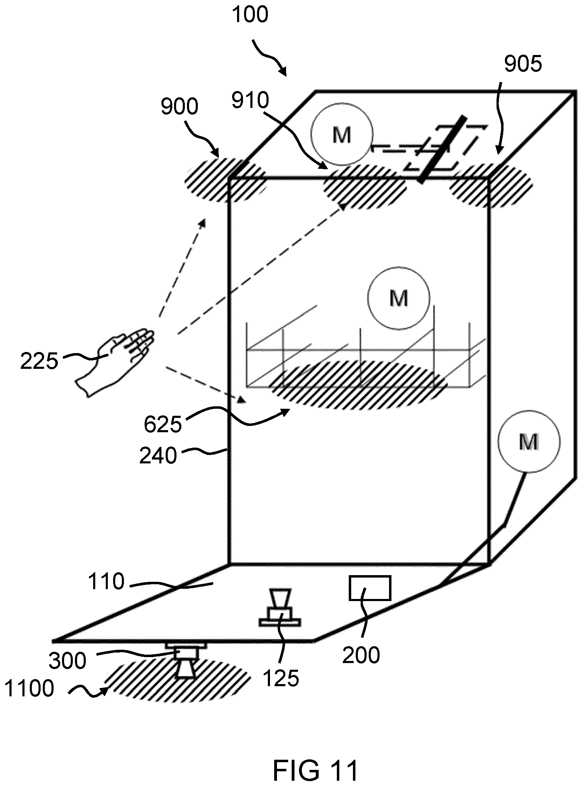

Figur 11 zeigt eine perspektivische Frontdarstellung eines Reinigungsgeräts 100 mit einer Bedienvorrichtung 200 gemäß einem Ausführungsbeispiel. Dabei kann es sich um das in einer der Figuren 6, 7, 8 oder 9 beschriebene Reinigungsgerät 100 mit der Bedienvorrichtung 200 handeln. Gezeigt ist in Fig. 11 ferner ein von der Außenkamera 300, hier beispielhaft im geöffneten Zustand der Gerätetür 110, überwachter Außenüberwachungsbereich 1100. Die Einleseeinheit 210 ist gemäß diesem Ausführungsbeispiel ausgebildet, um ein zweites Kamerasignal 305 einzulesen, das als das Abbild eines Fußes oder eines Schuhs eines Nutzers im Außenüberwachungsbereich 1100vor einer extern von dem Reinigungsgerät 100 angeordneten Umgebung repräsentiert, wobei die Ausgabeeinheit 215 ausgebildet ist, um unter Verwendung des zweiten Kamerasignals als das Steuersignal ein Türschließsignal zum Schließen der Gerätetür 110 des Reinigungsgeräts 100 auszugeben. Das zweite Kamerasignal wird gemäß diesem Ausführungsbeispiel von der Außenkamera 300 bereitgestellt. Die extern von dem Reinigungsgerät 100 angeordnete Umgebung ist als Fußboden zu verstehen. Die Anzeigeeinheit 310 ist gemäß einem Ausführungsbeispiel Teil eines Bedienfelds des Reinigungsgeräts 100 oder im Bereich eines solchen Bedienfelds angeordnet. Das Bedienfeld ist gemäß einem Ausführungsbeispiel zur manuellen Einstellung von Reinigungsfunktionen des Reinigungsgeräts 100 durch den Nutzer vorgesehen. Das Türschließsignal ist gemäß unterschiedlichen Ausführungsbeispielen ausgebildet, um ein Schließen der Gerätetür 110 oder ein Schließen der Gerätetür 110 gefolgt von einem automatischen Programmstart zu bewirken.

Figur 12 zeigt eine schematische Darstellung einer Bedienvorrichtung 200 gemäß einem Ausführungsbeispiel. Dabei kann es sich um die in einer der Figuren 2 bis 11 beschriebene Bedienvorrichtung 200 handeln.

Die Bedienvorrichtung 200, die auch als "Klassifikator" bezeichnet werden kann oder einen solchen aufweist, ist ausgebildet, um die Kamerasignale 220 von der Kamera 1200 einzulesen und zu klassifizieren, um die Steuersignale 230 auszugeben. Gemäß diesem Ausführungsbeispiel werden die Steuersignale 230 an die in Fig. 1 gezeigte Gerätesteuerung des Reinigungsgeräts ausgegeben, welche wiederum entsprechende Ansteuersignale 1205 zum Ansteuern der Türbewegungsvorrichtung 112 und/oder Korbbewegungsvorrichtung 145 an die Türbewegungsvorrichtung 112 und/oder Korbbewegungsvorrichtung 145 ausgibt. Gemäß einem alternativen Ausführungsbeispiel werden die Steuersignale 230 von der Bedienvorrichtung 200 direkt an die Türbewegungsvorrichtung 112 und/oder Korbbewegungsvorrichtung 145 ausgegeben.

Die Kamera 1200 wird hierbei gemäß einem Ausführungsbeispiel nicht nur zur Bedienung der Tür und/oder Körbe wie hier beschrieben herangezogen, sondern sie erfüllt auch bei geschlossener Tür und gegebenenfalls außerhalb eines Spülprogramms und/oder während des Spülprogramms weitere Funktionen, z. B. für eine Beladungserkennung nach Art und Menge, Verschmutzungserkennung, Trocknungsüberwachung und/oder Erkennung einer Spülarmblockade.

Figur 13 zeigt ein Ablaufdiagramm eines Verfahrens 1300 gemäß einem Ausführungsbeispiel zum Bedienen eines Reinigungsgeräts mit zumindest einer Kamera und zumindest einer beweglichen Gerätekomponente. Dabei kann es sich um das in Fig. 1 gezeigte Reinigungsgerät handeln. Das Verfahren 1300 ist von der in einer der Figuren 2 bis 11 beschriebenen Bedienvorrichtungen ansteuerbar oder ausführbar.

Das Verfahren 1300 weist zumindest einen Schritt 1305 des Einlesens und einen Schritt 1310 des Ausgebens auf. Im Schritt 1305 des Einlesens wird ein Kamerasignal von der Kamera eingelesen, wobei das Kamerasignal beispielsweise ein Abbild einer Hand eines Nutzers vor einem definierten Hintergrund repräsentiert. Im Schritt 1310 des Ausgebens wird ein Steuersignal zum Bewegen der Gerätekomponente des Reinigungsgeräts ausgegeben, abhängig von dem Kamerasignal.

Die hier vorgestellten Verfahrensschritte können wiederholt sowie in einer anderen als in der beschriebenen Reihenfolge ausgeführt werden.

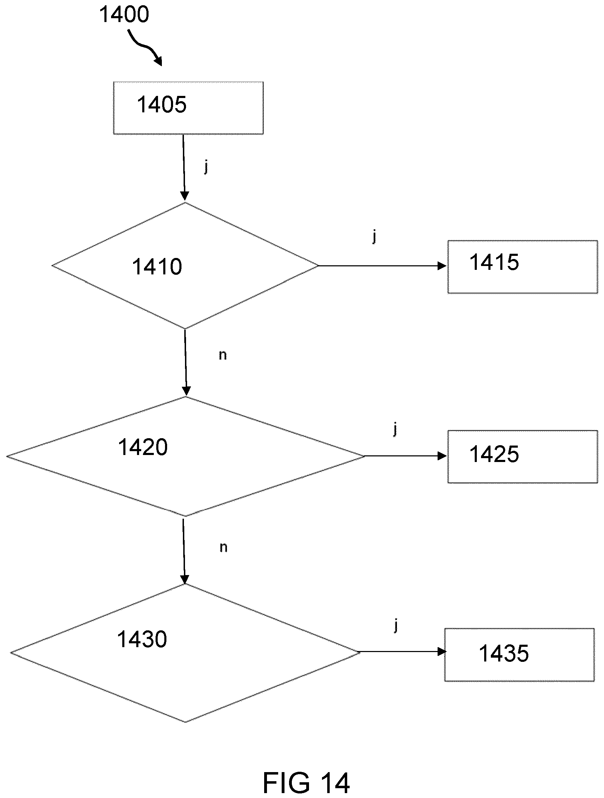

Figur 14 zeigt ein Blockschaltbild 1400 eines Verfahrens gemäß einem Ausführungsbeispiel zum Bedienen eines Reinigungsgeräts. Dabei kann es sich um ein Blockschaltbild 1400 das in Fig. 13 beschriebenen Verfahrens mit zusätzlichen Blöcken 1405, 1410, 1415, 1420, 1425, 1430, 1435 handeln.

In einem ersten Block 1405 wird abgefragt, ob ein Programm des Reinigungsgeräts beendet ist. Wenn das Programm des Reinigungsgeräts beendet ist, wird in einem zweiten Block 1410 abgefragt, ob ein Kamerasignal anliegt, bei dem das Abbild die extern von dem Reinigungsgerät angeordnete Umgebung und die Hand vor der Anzeigeeinheit repräsentiert. Wenn ein Kamerasignal anliegt, bei dem das Abbild die Umgebung und die Hand vor der Anzeigeeinheit repräsentiert, wird in einem dritten Block 1415 die Gerätetür geöffnet. Wenn kein Kamerasignal anliegt, bei dem das Abbild die Umgebung und die Hand vor der Anzeigeeinheit repräsentiert, wird in einem vierten Block 1420 abgefragt, ob ein Kamerasignal anliegt, bei dem das Abbild die Beschickungsöffnung und die Hand vor dem Geschirrkorb repräsentiert. Wenn ein Kamerasignal anliegt, bei dem das Abbild die Beschickungsöffnung und die Hand vor dem Geschirrkorb repräsentiert, wird in einem fünften Block 1425 der Geschirrkorb ein- oder ausgefahren. Wenn kein Kamerasignal anliegt, bei dem das Abbild die Beschickungsöffnung und die Hand vor dem Geschirrkorb repräsentiert, wird in einem sechsten Block 1430 abgefragt, ob ein Kamerasignal anliegt, bei dem das Abbild die Beschickungsöffnung und die Hand vor dem Türstößel repräsentiert. Wenn ein Kamerasignal anliegt, bei dem das Abbild die Beschickungsöffnung und die Hand vor dem Türstößel repräsentiert, wird in einem siebten Block 1435 die Gerätetür geschlossen.

In anderen Worten ausgedrückt zeigt Fig. 14 die prinzipiellen bzw. beispielhaften Verfahrensschritte ausgehend von einem beendeten Spülprogramm. Am Ende des Programms wird in dem zweiten Block 1410 mittels des virtuellen Sensors im Bedienfeld des Geräts abgefragt, ob die Tür spaltweise bzw. ganz geöffnet werden soll. Befindet sich die Hand des Bedieners vor dem virtuellen Sensor, wird die Tür geöffnet bzw. gekippt, dargestellt durch den dritten Block 1415. Der Bediener öffnet jetzt manuell die Gerätetür. Im Anschluss an diesen Verfahrensschritt bewertet der Klassifikator die virtuellen Sensoren in der Beschickungsöffnung, dargestellt durch den vierten Block 1420. Bei dem Erkennen der Hand wird der entsprechende Korb ausgefahren, dargestellt durch den fünften Block 1425. In diesem Zustand kann der Korb Be- oder Entladen werden. Erkennt die Kamera bzw. der Klassifikator die Hand des Bedieners am virtuellen Sensor bzw. im Bereich vor dem Korb, wird der Korb von der Korbbewegungsvorrichtung wieder in den Geschirrspüler bewegt. Abschließend fragt der Klassifikator über die Kamera den virtuellen Sensor bzw. die virtuelle Zone im Bereich des Türstößels ab, dargestellt durch den sechsten Block 1430. Wird die Hand des Bedieners in diesem Bereich erkannt, schließt die Türbewegungsvorrichtung die Gerätetür, siehe siebter Block 1435.

Eine andere als die beschriebene beispielhafte Blockabfolge 1405, 1410, 1415, 1420, 1425, 1430, 1435 ergibt sich analog.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Bedienvorrichtung (200) zum Bedienen eines Reinigungsgeräts (100) mit zumindest einer beweglichen Gerätekomponente und zumindest einer Kamera (125; 630; 1200), wobei die Bedienvorrichtung (200) die folgenden Merkmale aufweist:
- eine Einleseeinheit (210), die ausgebildet ist, um ein Kamerasignal (220) von der Kamera (125; 630; 1200) einzulesen; und
- eine Ausgabeeinheit (215), die ausgebildet ist, um abhängig von dem Kamerasignal (220) ein Steuersignal (230) zum Bewegen der Gerätekomponente des Reinigungsgeräts (100) auszugeben,
**dadurch gekennzeichnet,**
**dass** die Kamera (125; 630; 1200) eine Innenraumkamera zum Überwachen eines Innenraums des Reinigungsgeräts (100) ist, und
**dass** das Kamerasignal (220) ein Abbild einer Hand (225) eines Nutzers vor einem definierten Hintergrund repräsentiert.

2. Bedienvorrichtung (200) gemäß Anspruch 1, bei der die Einleseeinheit (210) ausgebildet ist, um ein erstes Kamerasignal (235) von der Kamera (125; 630; 1200) einzulesen, das als das Abbild eine Hand (225) eines Nutzers im Bereich eines Türstößels (120) vor einer Beschickungsöffnung (240) des Reinigungsgeräts (100) repräsentiert, wobei die Ausgabeeinheit (215) ausgebildet ist, um unter Verwendung des ersten Kamerasignals (235) als das Steuersignal (230) ein Türschließsignal (245) zum Schließen einer Gerätetür (110) des Reinigungsgeräts (100) auszugeben.

3. Bedienvorrichtung (200) gemäß einem der vorangegangenen Ansprüche, bei der die Einleseeinheit (210) ausgebildet ist, um ein zweites Kamerasignal (305) von einer zweiten Kamera (300) einzulesen, das als das Abbild eine Hand (225) eines Nutzers im Bereich einer Anzeigeeinheit (310) des Reinigungsgeräts (100) vor einer extern von dem Reinigungsgerät (100) angeordneten Umgebung (400) repräsentiert, wobei die zweite Kamera (300) eine Außenkamera ist, und wobei die Ausgabeeinheit (215) ausgebildet ist, um unter Verwendung des zweiten Kamerasignals (305) als das Steuersignal (230) ein Türöffnungssignal (315) zum Öffnen einer Gerätetür (110) des Reinigungsgeräts (100) auszugeben.

4. Bedienvorrichtung (200) gemäß einem der vorangegangenen Ansprüche, bei der die Einleseeinheit (210) ausgebildet ist, um ein weiteres Kamerasignal (600) von der Kamera (125; 630; 1200) einzulesen, das als das Abbild eine Hand (225) eines Nutzers im Bereich eines Geschirrkorbs (140) des Reinigungsgeräts (100) vor einer Beschickungsöffnung (240) des Reinigungsgeräts (100) repräsentiert, wobei die Ausgabeeinheit (215) ausgebildet ist, um unter Verwendung des weiteren Kamerasignals (600) als das Steuersignal (230) ein Geschirrkorbsignal (610) zum Bewegen des Geschirrkorbs (140) auszugeben.

5. Bedienvorrichtung (200) gemäß Anspruch 4, bei der die Einleseeinheit (210) ausgebildet ist, um als das weitere Kamerasignal (600) ein erstes weiteres Kamerasignal einzulesen, das als das Abbild die Hand (225) des Nutzers vor der Beschickungsöffnung (240) im Bereich des Geschirrkorbs (140) repräsentiert, der in einem aus einem Spülraum (105) des Reinigungsgeräts (100) herausragenden Zustand (620) angeordnet ist, wobei die Ausgabeeinheit (215) ausgebildet ist, um unter Verwendung des ersten weiteren Kamerasignal als das Geschirrkorbsignal (610) ein erstes Geschirrkorbsignal zum Einfahren des Geschirrkorbs (140) in den Spülraum (105) auszugeben.

6. Bedienvorrichtung (200) gemäß einem der Ansprüche 4 oder 5, bei der die Einleseeinheit (210) ausgebildet ist, um als das weitere Kamerasignal (600) ein zweites weiteres Kamerasignal einzulesen, das als das Abbild die Hand (225) des Nutzers vor der Beschickungsöffnung (240) im Bereich des Geschirrkorbs (140) repräsentiert, der in einem in dem Spülraum (105) des Reinigungsgeräts (100) hineingeschobenen Zustand (800) angeordnet ist, wobei die Ausgabeeinheit (215) ausgebildet ist, um unter Verwendung des zweiten weiteren Kamerasignals als das Geschirrkorbsignal (610) ein zweites Geschirrkorbsignal zum Ausfahren des Geschirrkorbs (140) aus dem Spülraum (105) heraus auszugeben.

7. Bedienvorrichtung (200) gemäß einem der vorangegangenen Ansprüche, bei der die Einleseeinheit (210) ausgebildet ist, um das Kamerasignal (220) bei Anliegen eines Programm-Beendungssignals, das ein beendetes oder unterbrochenes Reinigungsprogramms des Reinigungsgeräts (100) repräsentiert, abzufragen.

8. Bedienvorrichtung (200) gemäß einem der vorangegangenen Ansprüche, bei der die Einleseeinheit (210) ausgebildet ist, um von der Kamera (125; 630; 1200) ein Bildsignal einzulesen, das ein Kamerabild der Kamera (125; 630; 1200) repräsentiert und unter Verwendung des Bildsignals eine von einer Bewegung der Gerätekomponente unabhängige zusätzliche Funktion des Reinigungsgeräts (100) durchzuführen, insbesondere eine Einheit zur Beladungserkennung nach Art und/oder Menge, Verschmutzungserkennung, Trocknungsüberwachung und/oder Erkennung einer Spülarmblockade des Reinigungsgeräts (100) anzusteuern.

9. Reinigungsgerät (100) mit zumindest einer beweglichen Gerätekomponente, zumindest einer als Innenraumkamera zum Überwachen eines Innenraums des Reinigungsgeräts (100) ausgebildeten Kamera (125; 630; 1200) und einer Bedienvorrichtung (200) gemäß einem der vorangegangenen Ansprüche.

10. Reinigungsgerät (100) gemäß Anspruch 9, das als eine Spülmaschine ausgeformt ist.

11. Verfahren (1300) zum Bedienen eines Reinigungsgeräts (100) mit zumindest einer Kamera (125; 630; 1200) und zumindest einer beweglichen Gerätekomponente, wobei das Verfahren (1300) die folgenden Schritte aufweist: Einlesen (1305) eines Kamerasignals (220) von der Kamera (125; 630; 1200); und Ausgeben (1310) eines Steuersignals (230) zum Bewegen der Gerätekomponente des Reinigungsgeräts (100), abhängig von dem Kamerasignal (220),
**dadurch gekennzeichnet,**
**dass** die Kamera (125; 630; 1200) eine Innenraumkamera zum Überwachen eines Innenraums des Reinigungsgeräts (100) ist, und
**dass** das Kamerasignal (220) ein Abbild einer Hand (225) eines Nutzers vor einem definierten Hintergrund repräsentiert.

12. Computer-Programmprodukt mit Programmcode zur Durchführung des Verfahrens (1300) nach Anspruch 11, wenn das Computer-Programmprodukt auf einer Bedienvorrichtung (200) gemäß einem der Ansprüche 1 bis 8 ausgeführt wird.

13. Maschinenlesbares Speichermedium, auf dem das Computer-Programmprodukt nach Anspruch 12 gespeichert ist.

## Claims

1. Operating device (200) for operating a cleaning apparatus (100) comprising at least one movable apparatus component and at least one camera (125; 630; 1200), the operating device (200) having the following features:
- a reading-in unit (210) which is designed to read in a camera signal (220) from the camera (125; 630; 1200); and
- an output unit (215) which is designed to output, depending on the camera signal (220), a control signal (230) for moving the apparatus component of the cleaning apparatus (100),
**characterised in that**
the camera (125; 630; 1200) is an interior camera for monitoring an interior of the cleaning apparatus (100), **and**
**in that** the camera signal (220) represents an image of a hand (225) of a user in front of a defined background.

2. Operating device (200) according to claim 1, in which the reading-in unit (210) is designed to read in a first camera signal (235) from the camera (125; 630; 1200), which represents, as the image, a hand (225) of a user, in the region of a door pusher (120), in front of a loading opening (240) of the cleaning apparatus (100), wherein the output unit (215) is designed to output a door closing signal (245) for closing an apparatus door (110) of the cleaning apparatus (100) using the first camera signal (235) as the control signal (230).

3. Operating device (200) according to either of the preceding claims, in which the reading-in unit (210) is designed to read in a second camera signal (305) from a second camera (300), which represents, as the image, a hand (225) of a user, in the region of a display unit (310) of the cleaning apparatus (100), in front of an environment (400) located externally of the cleaning apparatus (100), wherein the second camera (300) is an external camera, and wherein the output unit (215) is designed to output a door opening signal (315) for opening an apparatus door (110) of the cleaning apparatus (100) using the second camera signal (305) as the control signal (230).

4. Operating device (200) according to any of the preceding claims, in which the reading-in unit (210) is designed to read in a further camera signal (600) from the camera (125; 630; 1200), which represents, as the image, a hand (225) of a user, in the region of a dish rack (140) of the cleaning apparatus (100), in front of a loading opening (240) of the cleaning apparatus (100), wherein the output unit (215) is designed to output a dish rack signal (610) for moving the dish rack (140) using the further camera signal (600) as the control signal (230).

5. Operating device (200) according to claim 4, in which the reading-in unit (210) is designed to read in a first further camera signal as the further camera signal (600), which represents, as the image, the hand (225) of the user in front of the loading opening (240) in the region of the dish rack (140) which is arranged in a state (620) protruding from a washing chamber (105) of the cleaning apparatus (100), wherein the output unit (215) is designed to output a first dish rack signal for retracting the dish rack (140) into the washing chamber (105) using the first further camera signal as the dish rack signal (610).

6. Operating device (200) according to either of claims 4 or 5, in which the reading-in unit (210) is designed to read in a second further camera signal as the further camera signal (600), which represents, as the image, the hand (225) of the user in front of the loading opening (240) in the region of the dish rack (140) which is arranged in the state (800) in which it is pushed into the washing chamber (105) of the cleaning apparatus (100), wherein the output unit (215) is designed to output a second dish rack signal for extending the dish rack (140) out of the washing chamber (105) using the second further camera signal as the dish rack signal (610).

7. Operating device (200) according to any of the preceding claims, in which the reading-in unit (210) is designed to query the camera signal (220) when a program termination signal, which represents a terminated or interrupted cleaning program of the cleaning apparatus (100), is present.

8. Operating device (200) according to any of the preceding claims, in which the reading-in unit (210) is designed to read in an image signal from the camera (125; 630; 1200), which image signal represents a camera image of the camera (125; 630; 1200), and, using the image signal, to carry out an additional function of the cleaning apparatus (100) which is independent of a movement of the apparatus component, in particular to control a unit for load detection according to type and/or quantity, dirt detection, drying monitoring and/or detection of a washing arm blockage of the cleaning device (100).

9. Cleaning apparatus (100) comprising at least one movable apparatus component, at least one camera (125; 630; 1200) designed as an interior camera for monitoring an interior of the cleaning apparatus (100), and an operating device (200) according to any of the preceding claims.

10. Cleaning apparatus (100) according to claim 9, which is in the form of a dishwasher.

11. Method (1300) for operating a cleaning apparatus (100) comprising at least one camera (125; 630; 1200) and at least one movable apparatus component, the method (1300) comprising the following steps:
reading in (1305) a camera signal (220) from the camera (125; 630; 1200); and
outputting (1310), depending on the camera signal (220), a control signal (230) for moving the apparatus component of the cleaning apparatus (100),
**characterised in that**
the camera (125; 630; 1200) is an interior camera for monitoring an interior of the cleaning apparatus (100), and
**in that** the camera signal (220) represents an image of a hand (225) of a user in front of a defined background.

12. Computer program product comprising program code for carrying out the method (1300) according to claim 11 when the computer program product is executed on an operating device (200) according to any of claims 1 to 8.

13. Machine-readable storage medium on which the computer program product according to claim 12 is stored.

## Revendications

1. Dispositif de manipulation (200) permettant de manipuler un appareil de nettoyage (100) comportant au moins un composant d'appareil mobile et au moins une caméra (125 ; 630 ; 1200), dans lequel le dispositif de manipulation (200) présente les caractéristiques suivantes :
- une unité de lecture (210) qui est configurée pour lire un signal de caméra (220) provenant de la caméra (125 ; 630 ; 1200) ; et
- une unité d'émission (215) qui est configurée pour émettre, en fonction du signal de caméra (220), un signal de commande (230) pour déplacer le composant d'appareil de l'appareil de nettoyage (100),
**caractérisé en ce**
**que** la caméra (125 ; 630 ; 1200) est une caméra d'espace intérieur permettant de surveiller un espace intérieur de l'appareil de nettoyage (100), et
**que** le signal de caméra (220) représente une image d'une main (225) d'un utilisateur devant un arrière-plan défini.

2. Dispositif de manipulation (200) selon la revendication 1, dans lequel l'unité de lecture (210) est configurée pour lire un premier signal de caméra (235) provenant de la caméra (125 ; 630 ; 1200) qui représente, en tant qu'image, une main (225) d'un utilisateur dans la zone d'un poussoir de porte (120) devant une ouverture de chargement (240) de l'appareil de nettoyage (100), dans lequel l'unité d'émission (215) est configurée pour émettre, en utilisant le premier signal de caméra (235) en tant que signal de commande (230), un signal de fermeture de porte (245) pour fermer une porte d'appareil (110) de l'appareil de nettoyage (100).

3. Dispositif de manipulation (200) selon l'une des revendications précédentes, dans lequel l'unité de lecture (210) est configurée pour lire un deuxième signal de caméra (305) provenant d'une seconde caméra (300) qui représente, en tant qu'image, une main (225) d'un utilisateur dans la zone d'une unité d'affichage (310) de l'appareil de nettoyage (100) devant un environnement (400) disposé à l'extérieur de l'appareil de nettoyage (100), dans lequel la seconde caméra (300) est une caméra extérieure, et dans lequel l'unité d'émission (215) est configurée pour émettre, en utilisant le deuxième signal de caméra (305) en tant que signal de commande (230), un signal d'ouverture de porte (315) pour ouvrir une porte d'appareil (110) de l'appareil de nettoyage (100).

4. Dispositif de manipulation (200) selon l'une des revendications précédentes, dans lequel l'unité de lecture (210) est configurée pour lire un autre signal de caméra (600) provenant de la caméra (125 ; 630 ; 1200) qui représente, en tant qu'image, une main (225) d'un utilisateur dans la zone d'un panier à vaisselle (140) de l'appareil de nettoyage (100) devant une ouverture de chargement (240) de l'appareil de nettoyage (100), dans lequel l'unité d'émission (215) est configurée pour émettre, en utilisant l'autre signal de caméra (600) en tant que signal de commande (230), un signal de panier à vaisselle (610) pour déplacer le panier à vaisselle (140).

5. Dispositif de manipulation (200) selon la revendication 4, dans lequel l'unité de lecture (210) est configurée pour lire, en tant qu'autre signal de caméra (600), un premier autre signal de caméra qui représente, en tant qu'image, la main (225) de l'utilisateur devant l'ouverture de chargement (240) dans la zone du panier à vaisselle (140), lequel panier à vaisselle est disposé dans un état (620) dépassant d'un espace de lavage (105) de l'appareil de nettoyage (100), dans lequel l'unité d'émission (215) est configurée pour émettre, en utilisant le premier autre signal de caméra en tant que signal de panier à vaisselle (610), un premier signal de panier à vaisselle pour rétracter le panier à vaisselle (140) dans l'espace de lavage (105).

6. Dispositif de manipulation (200) selon l'une des revendications 4 ou 5, dans lequel l'unité de lecture (210) est configurée pour lire, en tant qu'autre signal de caméra (600), un second autre signal de caméra qui représente, en tant qu'image, la main (225) de l'utilisateur devant l'ouverture de chargement (240) dans la zone du panier à vaisselle (140), lequel panier à vaisselle est disposé dans un état (800) inséré dans l'espace de lavage (105) de l'appareil de nettoyage (100), dans lequel l'unité d'émission (215) est configurée pour émettre, en utilisant le second autre signal de caméra en tant que signal de panier à vaisselle (610), un second signal de panier à vaisselle pour sortir le panier à vaisselle (140) de l'espace de lavage (105).

7. Dispositif de manipulation (200) selon l'une des revendications précédentes, dans lequel l'unité de lecture (210) est configurée pour interroger le signal de caméra (220) en présence d'un signal de fin de programme qui représente un programme de nettoyage terminé ou interrompu de l'appareil de nettoyage (100).

8. Dispositif de manipulation (200) selon l'une des revendications précédentes, dans lequel l'unité de lecture (210) est configurée pour lire, à partir de la caméra (125 ; 630 ; 1200), un signal d'image qui représente une image de caméra de la caméra (125 ; 630 ; 1200) et, en utilisant le signal d'image, pour mettre en œuvre une fonction supplémentaire de l'appareil de nettoyage (100) indépendante d'un mouvement du composant d'appareil, en particulier pour commander une unité pour la détection du chargement selon le type et/ou la quantité, la détection de l'encrassement, la surveillance du séchage et/ou la détection d'un blocage du bras de rinçage de l'appareil de nettoyage (100).

9. Appareil de nettoyage (100) comportant au moins un composant d'appareil mobile, au moins une caméra (125 ; 630 ; 1200) conçue comme une caméra d'espace intérieur permettant de surveiller un espace intérieur de l'appareil de nettoyage (100), et un dispositif de manipulation (200) selon l'une des revendications précédentes.

10. Appareil de nettoyage (100) selon la revendication 9, lequel est formé comme un lave-vaisselle.

11. Procédé (1300) permettant de manipuler un appareil de nettoyage (100) comportant au moins une caméra (125 ; 630 ; 1200) et au moins un composant d'appareil mobile, dans lequel le procédé (1300) présente les étapes suivantes :
lecture (1305) d'un signal de caméra (220) provenant de la caméra (125 ; 630 ; 1200) ; et
émission (1310) d'un signal de commande (230) pour déplacer le composant d'appareil de l'appareil de nettoyage (100), en fonction du signal de caméra (220),
**caractérisé en ce**
**que** la caméra (125 ; 630 ; 1200) est une caméra d'espace intérieur permettant de surveiller un espace intérieur de l'appareil de nettoyage (100), et
**que** le signal de caméra (220) représente une image d'une main (225) d'un utilisateur devant un arrière-plan défini.

12. Produit-programme informatique comportant un code de programme permettant de mettre en œuvre le procédé (1300) selon la revendication 11 lorsque le produit-programme informatique est exécuté sur un dispositif de manipulation (200) selon l'une des revendications 1 à 8.

13. Support de stockage lisible par machine sur lequel est stocké le produit-programme informatique selon la revendication 12.
